(19) Europäisches Patentamt
European Patent Office
Office européen des brevets

(11) **EP 1 684 589 B1**

(12) **EUROPEAN PATENT SPECIFICATION**

(45) Date of publication and mention
of the grant of the patent:
**07.01.2009 Bulletin 2009/02**

(51) Int Cl.:
*A21D 8/04* (2006.01)   *A21D 2/18* (2006.01)
*A23L 1/20* (2006.01)   *A23L 1/218* (2006.01)
*A23L 1/317* (2006.01)   *A23L 1/314* (2006.01)
*A23C 9/13* (2006.01)   *C12C 5/00* (2006.01)
*C12G 1/00* (2006.01)

(21) Application number: **04811501.8**

(22) Date of filing: **19.11.2004**

(86) International application number:
**PCT/US2004/038795**

(87) International publication number:
**WO 2005/051085 (09.06.2005 Gazette 2005/23)**

(54) **HIGH SOLUBLE FIBER FERMENTED FOODS**

FERMENTIERTE NAHRUNGSMITTEL MIT HOHEM GEHALT AN LÖSLICHEN BALLASTSTOFFEN

ALIMENTS FERMENTES CONTENANT DES FIBRES HAUTEMENT SOLUBLES

(84) Designated Contracting States:
**AT BE BG CH CY CZ DE DK EE ES FI FR GB GR HU IE IS IT LI LU MC NL PL PT RO SE SI SK TR**

(30) Priority: **20.11.2003 US 523633 P**

(43) Date of publication of application:
**02.08.2006 Bulletin 2006/31**

(73) Proprietor: **ARCHER-DANIELS-MIDLAND COMPANY**
**Decatur, Illinois 62526 (US)**

(72) Inventors:
 • **BINDER, Tom, P.**
 **Decatur, IL 62522 (US)**
 • **BUCK, Allan, W.**
 **Decatur, IL 62521 (US)**
 • **FLICKINGER, Brent**
 **Decatur, IL 62526 (US)**
 • **SEBREE, Bruce, R.**
 **Oakley, IL 62552 (US)**

(74) Representative: **Grünecker, Kinkeldey, Stockmair & Schwanhäusser**
**Anwaltssozietät**
**Leopoldstrasse 4**
**80802 München (DE)**

(56) References cited:
**EP-A- 0 463 935**      **EP-A- 0 540 421**
**WO-A-03/010277**

 • **PATENT ABSTRACTS OF JAPAN vol. 1996, no. 05, 31 May 1996 (1996-05-31) & JP 08 009953 A (KIRIN BREWERY CO LTD; others: 01), 16 January 1996 (1996-01-16)**
 • **LAURENTIN A. ET AL.: "Preparation of indigestible pyrodextrins from different starch sources." JOURNAL OF AGRICULTURAL AND FOOD CHEMISTRY, vol. 51, no. 18, 25 July 2003 (2003-07-25), pages 5510-5515, XP002322121**

**Description**

BACKGROUND

Fermentation is a time-honored method of food processing. The oldest records of fermented foods come from Southeast Asia. The ancient Egyptians developed bakeries and breweries that used yeast Many cultures consume foodstuffs made by brewing, vinting, baking, culturing milk, and other methods that involve fermentation, and these processes are still in use today.

A focus of the modem food industry is to develop healthier, more flavorful foods, particularly with regard to highly processed foods. Many food processing methods remove "healthy" components, such as fiber. Fiber, if it is to appear in the finished food product, must then be added back into the product. It is difficult to reintroduce fiber in a way that is both cost-effective and does not affect the flavor or functionality of the finished product. For instance, the patent familiy of EP-A-0 463 935 and

U.S. Pat. No. 5,629,036 describes adding "indigestible dextrin" to a bread dough, where the dextrin has been digested to soluble fiber. This adds to the costs of preparing the baked goods, by adding the expense of creating and isolating the soluble fiber, and introducing the fiber into the bread dough.

EP-A-0 540 421 relates to indigestible dextrins, which are prepared by hydrolyzing pyrodextrin with alpha-amylase and glucoamylase and which contain dietary fiber. The indigestible dextrin is usable for foods.

Patent Abstracts of Japan, Volume 1996, No. 5, May 31, 1996 relates to a low-calorie beer produced by mixing a hardly digestible component, which human beings cannot digest, with beer wort and fermenting said wort.

SUMMARY

A method is provided for increasing the soluble fiber content of a fermented food by adding to the foodstuff before the fermentation step a dextrin in which the glycosidic linkages have been highly randomized. The enzymes involved in fermentation can only partially degrade the added randomly-linked dextrin, reducing it to sugar and soluble fiber. The greater the amount of randomization of the linkages in the dextrin, the greater the indigestibility, and the greater the amount of soluble fiber produced during the fermentation process.

A method also is provided of making a fermented foodstuff having an increased amount of soluble fiber, relative to a foodstuff not made with the method, where the method includes: (a) mixing pyrodextrin into the foodstuff before fermentation; and (b) fermenting the foodstuff under conditions that allow digestion of starch linkages; thereby making a fermented foodstuff having an increased amount of soluble fiber relative to an foodstuff not made by the method.

A method also is provided for making a bread having an increased amount of soluble fiber relative to a bread not made with the method where, when the method of making bread includes the steps of: (i) optionally making a bread sponge and allowing the bread sponge to undergo one or more risings; (ii) making a bread dough that includes the bread sponge and allowing the bread dough to undergo one or more risings; and (iii) baking the bread dough; one adds pyrodextrin to the bread sponge, or the bread dough, or to both the bread sponge and the bread dough. In such products, glucosidases and/or amylases can be added for complete digestion of the pyrodextrin to soluble fiber.

Another method is provided for making a bread sponge or bread dough or both having an increased amount of soluble fiber relative to a bread sponge or bread dough or both not made with the method, where the method includes mixing pyrodextrin into the bread sponge or the bread dough or both before allowing the bread sponge or the bread dough or both to undergo one or more risings; thereby making a bread sponge or bread dough or both having an increased amount of soluble fiber relative to a bread sponge or bread dough or both not made with the method. In such products, glucosidases and/or amylases can be added for complete digestion of the pyrodextrin to soluble fiber.

Another method also is provided for making yoghurt having an increased amount of soluble fiber relative to yoghurt not made with the method, where the method includes adding pyrodextrin to the yoghurt formulation before culture with active yoghurt cultures, thereby making yoghurt having an increased amount of soluble fiber relative to yoghurt not made with the method.

The invention also includes a method of making sausage having an increased amount of soluble fiber relative to sausage not made with the method, the method comprising adding pyrodextrin to the sausage formulation before curing, thereby making sausage having an increased amount of soluble fiber relative to sausage not made with the method.

Compositions made by the above methods also are described.

Kits are also provided herein, for instance a bread-making kit that includes flour, yeast and pyrodextrin, a beer-making kit that includes fermentable sugar and pyrodextrin, a wine-making kit comprising fermentable sugar and pyrodextrin. Glucosidases and/or amylases can be added for complete digestion of the pyrodextrin to soluble fiber and can be supplied in such kits.

Also provided is a method of making a high-fiber bread, where the method includes: (a) mixing pyrodextrin into bread dough; (b) allowing the bread dough to undergo one or more risings; and (c) baking the bread dough; thereby making a high fiber bread.

In a further embodiment, a method of making a high-fiber bread dough is provided, where the method includes mixing pyrodextrin into bread dough before allowing the bread dough to undergo one or more risings; thereby making a high-fiber bread dough.

In making either bread or bread dough, a starch degrading enzyme can be mixed into the bread dough before allowing the bread dough to undergo one or more risings. The starch degrading enzyme can be an amylase and/or a glucosidase. The bread dough can be packaged for the making of rolls.

A method of making a high-fiber beer also is provided, where the method includes mixing pyrodextrin into a beer mash, and producing beer from the beer mash. Alternatively, pyrodextrin can be mixed into the beer wort, and beer then produced from the wort. A starch degrading enzyme can also be mixed into the beer mash or beer wort, and can be an amylase and/or a glucosidase.

A high-fiber wine can be made similarly, by mixing pyrodextrin into wine must, and fermenting the wine must. As with the beer, starch degrading enzyme can also be mixed into the wine must, and can be an amylase and/or a glucosidase.

In further embodiments, a bread-making kit comprising flour, yeast and pyrodextrin is provided. Also provided are a beer-making kit comprising malt syrup and pyrodextrin and a wine-making kit comprising fruit juice and pyrodextrin. Such kits can also include a starch degrading enzyme, which can be an amylase and/or a glucosidase.

A high-fiber fermented foodstuff comprising a pyrodextrin is provided. The foodstuff can also include a starch degrading enzyme (*e.g.*, an amylase or a glucosidase).

Lastly, a composition is provided for use in preparing a fermented foodstuff, where the composition includes a pyrodextrin. The composition can also include a starch degrading enzyme (*e.g.*, an amylase and/or a glucosidase). The composition can be produced by (a) mixing pyrodextrin into the composition before fermentation; and (b) fermenting the composition under conditions that allow digestion of starch linkages; thereby making a composition having an increased amount of soluble fiber relative to a composition not made by the method. A starch degrading enzyme (*e.g.*, an amylase or a glucosidase) can also be mixed in before fermentation.

The fermented foodstuffs contemplated herein include, but are not limited to, bread, bread dough, rolls, bread mix, beer, wine, yoghurt, sausage, cheese, vinegar, soy sauce, tamari, shoyu, miso, natto, tempeh, amazake, kefir, kimchee and sauerkraut.

In any of the embodiments described herein, the pyrodextrin can be of a type where the alpha linkages in the pyrodextrin which are undigestible by $\alpha$-amylases or $\alpha$-glucosidases are at least 30% of the total alpha linkages, preferably at least 40%, more preferably at least 50% of the total alpha linkages.

A starch degrading enzyme can also be mixed into the foodstuff before fermentation. The starch degrading enzyme can be an amylase or a glucosidase.

Preferably, the amount of pyrodextrin added is between about 2 grams and about 12 grams per serving, more preferably, between about 4 grams and about 9 grams per serving. Most preferably the amount of pyrodextrin added is about 6 grams per serving.

Preferably, the amount of soluble fiber in the finished foodstuff is between about 1 gram and about 6 grams per serving, more preferably, between about 2 grams and about 4.5 grams per serving. Most preferably the amount of soluble fiber in the finished foodstuff is about 3 grams per serving.

DETAILED DESCRIPTION

Methods are provided for increasing the soluble fiber content of fermented foods by adding a randomized-linkage dextrin to the foodstuff before the fermentation step. The enzymes involved in fermentation can only partially degrade the added dextrin, reducing it to fermentable and digestible sugar and soluble fiber. In particular, the invention utilizes polysaccharide in which the glycosidic linkages have been randomized, and which has been dextrinized to the extent that the resulting randomized-linkage dextrins are soluble. The randomization of the linkages renders the dextrinized starch only partially digestible to conventional amylases and glucosidases. Partial digestion of the dextrinized starch by these enzymes produces sugar and soluble fiber. The ratio of the two is determined by the degree of randomization of the linkages. If the dextrinized starch is only somewhat randomized, and still retains long chains of $\alpha$-1-4 linkages, then the ratio of soluble fiber:sugar will be low. If the dextrinized starch is highly randomized, with few long chains of $\alpha$-1-4 linkages, and many $\alpha$-1-6, $\alpha$-1-2, $\alpha$-1-3 linkages, then the ratio of soluble fiber:sugar produced will be much higher. In general, the greater the amount of randomization of the linkages in the dextrin, the greater the indigestibility, and the greater the amount of soluble fiber produced during the fermentation process.

A "starch" is a complex carbohydrate found chiefly in seeds, fruits, tubers, roots and stem pith of plants, notably in corn, potatoes, wheat, and rice. Starch contains two forms of poly-D-glucose, amylose and amylopectin. Amylose is a linear chain of D-glucose having $\alpha$-1-4 linkages, while amylopectin is a branched form of amylose, with $\alpha$-1-6 linkages at its branch points. Starch an important foodstuff and has other uses, especially in adhesives, and as fillers and stiffeners for paper and textiles.

The term "dextrin" refers to any one of a number of oligo-D-glucose compounds having the same general formula as starch, but are smaller and less complex molecules and typically are prepared by the action of enzymes, heat or acid. Dextrin is also called α-glucan or amylopectin, and typically has both α-1-4 and α-1-6 linkages, "α-amylase" is an enzyme that cleaves linear α-1-4 glucose linkages into shorter sections, and "α-glucosidase" is an enzyme that normally cleaves terminal α-1-4 or α-1-6 linkages to release glucose. Because of the complexity caused by the mixture of glycosidic linkages in pyrodextrins, they are not completely fermentable by normal brewer's yeast, and their digestion requires the addition of other enzymes. Dextrins are essentially tasteless and have no sweetness.

"Limit dextrins" are dextrins which remain after cleavage by enzymes, due to the enzyme molecules' being halted at the branches in the dextrin molecules. Alpha-amylase, for instance, produces "α-limit dextrin" wherever it is stopped by α-1-6 link branch points in dextrin.

Dextrins are produced as intermediate products in the hydrolysis of starch by heat, by acids, and by enzymes. Their nature and their chemical behavior depend on the kind of starch from which they are derived. For example, some react with iodine to give a reddish-brown color, others a blue color, and still others yield no color at all. Dextrin is prepared by heating dry starch or starch treated with acids to produce a colorless or yellowish, tasteless, odorless powder that, when mixed with water, forms a strongly adhesive paste. It is used widely in adhesives, *e.g.*, for postage stamps, envelopes, and wallpapers, and for sizing paper and textiles.

By "pyrodextrin" is meant a mixture of glucose-containing oligosaccharides that is derived from the partial hydrolysis of starch under conditions of limiting water. Generally, starch is exposed to acid (generally hydrochloric acid) and heat, during which the starch linkages are broken and re-form randomly. Pyrodextrins have been found to promote the proliferation of *Bifidobacterium* species in the large intestine, and they are resistant to digestion in the upper gastrointestinal tract. *Bifidobacterium* spp. are bacteria which normally reside in the lower digestive tract and proliferate if the appropriate food is supplied to them. As they digest this food and grow, they modify their local environment and make conditions less favorable for other potentially pathogenic microorganisms. The pyrodextrins made by the methods described herein are not easily digestible by the enzymes produced by the human body and therefore these pyrodextrins survive to reach the lower intestine and are there digested, at least in part, by *Bifidobacterium* spp.

The randomized alpha linkages include α-1-2, α-1-3, α-1-4 and α-1-6 and some beta linkages which are no longer able to fit easily into the active sites of starch degrading enzymes. Because of this change, the pyrodextrins are not readily digestible by α-amylase or α-glucosidases, or are digested at a much slower rate than dextrins not made by the methods described herein. "Undigestible" linkages therefore are broken down at a slower rate than the linkages normally found in native starch, or are not broken down at all in the normal human digestive process. The proportion of such undigestible linkages in relation to the total number of linkages should be greater than or equal to about 30% of the total pyrodextrin. Preferably, the proportion is 40% or greater, and more preferably, 50% or greater of the total number of linkages should be undigestible by α-amylase or α-glucosidases. The amount of undigestible linkages can be increased further, *i.e.*, beyond 50%, by changing the amount of acid, moisture level, or the length of heat treatment, but longer treatments also result in increased color development in the finished product. The method described herein produces a high percentage of undigestible linkages with a minimum of color development in the finished product, rendering the product especially advantageous for use in baked goods such as white bread.

The fiber content of pyrodextrin is measured by treating a solution of the dextrin sequentially with α-amylase and glucoamylase under proper conditions of pH and temperature. The fraction of oligosaccharides that remain after this treatment and have a DP (degree of polymerization) greater than 3 is the fraction of soluble fiber. In general, each dextrin molecule is digested to some extent, leaving a variety of oligosaccharides behind.

By "fermentation" is meant the energy-yielding metabolic breakdown by a microorganism of a nutrient molecule into a simpler product, without net oxidation. By "fermented foodstuff" is meant an edible product the production of which contains at least one fermentation step. Unless expressly stated otherwise, "fermented foodstuff" refers to an edible product, the production of which contains at least one fermentation step in which a digestible portion of pyrodextrin is metabolized. The fermentation reaction can be carried out by microorganisms such as, without limitation, yeast or bacteria. This can include, but is not limited to, species such as *Saccharomyces, Lactobacillus, Lactococcus, Pediococcus, Acetobacter, Streptococcus, Leuconostoc, Penicillium, Geotrichum, Micrococcus, Propionibacterium* and *Aspergillus* species.

Examples of fermented foodstuffs include, but are not limited to, bread, bread dough, rolls, bread mix, beer, wine, cheese, yoghurt, vinegar, pickles, sauerkraut, kephir, filmjölk, fermented Baltic Herring, sausages such as semi-dry and dry sausage, salami, mortadella, pepperoni, summer sausage, thuringer, and soudjouk, olives, kefir, kushuk, lamoun makbouss, mekhalel, torshi, tursu, achar, gundruk, Indian pickles, asinan, bai-ming, belacan, burong mangga, dalok, jeruk, fish sauce, kimchi, leppet-so, miang, nata de coco, nata de pina, naw-mai-dong, pak-siam-dong, paw-tsay, phak-dong, phonlami-dong, fish paste, sajur asin, sambal tempo-jak, santol, si-sek-chai, sunki, tang-chai, tempeh, tempoyak, vanilla, amazake, cha-ts'ai, dan moogi, dongchimi, hiroshimana, hot pepper sauce, jangagee, kachdoo kigactuki, kakduggi, kimchi, miso, mootsanji, nara senkei, natto, narazuke, nozawana, nukamiso-zuke, oigee, oiji, oiso baegi, omizuke, pow tsai, red in snow, sake, seokbakji, shoyu, siozuke, soy sauce, szechwan cabbage, tai-tan tsoi, takana, takuan, tamari, tempeh, totkal kimchi, tsa tzai, tsu, umeboshi, wasabi-zuke, yen tsai, hibiscus seed, lamoun makbouss, mauoloh, msir, mslalla, oilseed, ogili, ogiri, lupin seed, fermented meat from walrus, fish, birds.

The pyrodextrin can be added to a foodstuff before fermentation in order to produce a high-fiber version of the foodstuff. By "high-fiber" is meant that the foodstuff has an increased amount of soluble fiber relative to a version of the foodstuff where pyrodextrin was not added prior to the fermentation step. Preferably, the amount of pyrodextrin added to the foodstuff is about 2 grams to about 12 grams of pyrodextrin per serving. More preferably, the amount added is about 6 grams of pyrodextrin per serving.

The amount of soluble fiber in the finished product is a result of several factors, including the amount of pyrodextrin added in making the product, and the degree to which the fermentation is allowed to progress. For instance, a first food formulation containing more pyrodextrin than a second food formulation may nevertheless contain less soluble fiber if the fermentation process is cut short. Adjustment of such variables is well within the skill of the ordinary practitioner in the field of food product formulation and manufacturing, and can be made in accordance with the desired characteristics of the finished product, cost of ingredients, etc. Preferably, the amount of soluble fiber in the finished product is about l gram to about 6 grams of soluble fiber per serving. More preferably, the amount of soluble fiber in the finished product is about 3 grams of per serving.

The pyrodextrin can be added, according to one embodiment of the invention, to such items in advance of the fermentation step. For instance, the pyrodextrin can be added to beer during the mashing step or just before the fermentation step, to wine just before the fermentation step, or can be added to bread sponge or dough before fermentation or proofing.

Many mass produced breads, such as "white" breads, are low in fiber. High fiber breads are generally produced in the same way as conventional "white" breads, but with the addition of fiber to the sponge or dough, such as whole wheat flour or bran. The pyrodextrins and methods described herein can be used to produce a bread, or other baked product that uses a rising step, that is high in soluble fiber. The pyrodextrin can be added before one or more rising steps (as in a sponge and dough method or other commercially recognized methods of bread production), so that the fermentation by the yeast converts the pyrodextrin to soluble fiber and sugar. The sugar is used by the yeast in causing the bread to rise.

Commercial bakers generally allow bread dough to rise to a set volume or height, and times for proofing are set accordingly. When the pyrodextrin is added to the bread sponge or dough, the fermentation by the yeast produces soluble fiber during the rising step. The soluble fiber may require extension of the fermentation and/or rising time. In a commercial bakery, times for fermentation and proofing are optimized so as to not decrease throughput and increase costs of production unnecessarily. It is expected that one of ordinary skill in the commercial baking arts will adjust the precise amount of pyrodextrin to be added to a bread or baked good formulation so as to balance the amount of soluble fiber in the finished product with the speed and efficiency of the production process.

The pyrodextrin can also be added, according to one embodiment of the invention, to prepackaged goods intended to be used in the production of such items. For instance, the pyrodextrin can be included in bread machine or other dough mixes, and prepackaged refrigerated or frozen doughs containing yeast. Prepackaged refrigerated or frozen doughs are those in which all of the ingredients necessary to make a baked product have been mixed together, including the flour, water and yeast or other microorganism(s) (or enzymes) necessary for the fermentation and/or rising.

Dough mixes are generally in dry form, and contain flour and other ingredients that, upon the addition of the appropriate amount of water, form a dough that is the basis of a baked product. Such dough mixes can be made for breads (*e.g.*, and without limitation, white, wheat, rye, corn, and sweet breads, etc.) or other baked goods (*e.g.*, and without limitation, rolls and bagels). In one embodiment of the present invention, however, the dough mix is for a baked good the production of which involves at least one fermentation step, *i.e.,* at least one rising step. Such a fermentation step can be a sponge step or a dough step, or both. Such baked goods are generally leavened breads, but the production of other types of baked goods can be modified to introduce a fermentation step. For instance, the production of a cake or a fruit bread product can be modified to involve a "sponge"-type fermentation step.

In the present invention, pyrodextrins, such as, without limitation, those prepared according to Example 1, can be added to either the sponge or the dough before fermentation or rising. The pyrodextrin can be in addition to the sugars normally added to sponge or dough to cause the yeast to raise the bread, or can be added instead of such sugars. Optionally, amylases and glucosidases can also be added for conversion of the pyrodextrins. In either case, the yeast will digest and consume the fermentable component of the pyrodextrins, leaving only the soluble fiber component of the pyrodextrins. A bread made in this way will be high in soluble fiber. The invention is especially useful in the production of baked goods not normally considered "high in fiber" such as white bread, rolls, etc.

The pyrodextrin can also be added, according to the invention, to prepackaged goods intended to be used in the production of such items. For instance, the pyrodextrin and stabilized enzymes can be included in bread machine mixes, and prepackaged refrigerated or frozen doughs containing yeast.

It should be noted that *Saccharomyces cerevisiae,* the yeast commonly used in making beer, wine and bread, is not able to break down starch without the aid of additional enzymes. Yeast is able to utilize maltose and dextrose, while larger malto-oligosaccharides are broken down by other enzymes. In beermaking for instance, the mashing step induces alpha and beta amylase, which operate at temperatures typically between 142-158°F to reduce larger starch molecules to the smaller molecules maltose and dextrose. In the present invention, glucosidases and/or amylases can be added in those fermentation steps that use *S. cerevisiae* or other food fermentation microorganisms that do not secrete the necessary glucosidases or amylases. Other enzymes can be added in situations where it may be beneficial for the fermentation microorganism to break down the pyrodextrins, or where it may increase the speed and/or efficiency of the fermentation step.

The pyrodextrins can also be used in the production of other fermented foods, including, but not limited to, kefir, yogurt, cheese, soy sauce and miso. "Kefir" is a femented milk product. Shoyu and tamari are types of soy sauce; shoyu contains wheat in addition to soy protein, tamari does not. Both are made by fermentation. Additional Japanese fermented soy food products include, but are not limited to, "miso" (traditional Japanese soybean paste, and is made from fermented soybeans, salt and rice or barley, and used in making soups), "natto" and tempeh. "Amazake" is a nonalcoholic fermented food made by incubating a mixture of cooked sweet rice and koji (rice with an *Aspergillus* culture added) for 6-10 hours. The sweetness develops as the abundant digestive enzymes in the koji break down the complex starches in the rice into easily digestible, natural sugars.

The pyrodextrins can also be used in the production of beer and wine with increased amounts of soluble fiber.

In the usual manufacture of a fermented alcoholic beverage, fermentable sugar is added prior to fermentation. In the present invention, a portion of that fermentable sugar can be replaced with pyrodextrin.

Beer, for instance, is produced from malt. Malt is fresh grain that has been steeped, sprouted, and then heated ("kilned") to dry it for storage. A cereal grain is a seed that contains stored energy in the form of starch, for later germination and growth. The steeping phase causes the live grain to sprout, and activates the native α-amylase enzymes in the grain. These enzymes begin to convert the starch in the grain to maltose, glucose and other sugars. Before this process progresses very far, the grain is then gently dried at a temperature that kills the germinating seed, but does not deactivate the enzymes. The dried grain ("malt") is stored until it is used in brewing.

In brewing, the grain is ground coarsely, and steeped again in a mixture with a porridge-like consistency (a "mash"). The mash is kept at a temperature optimal for α- and β- amylase (and any other exo-acting α-1-4 amylases) to convert the remaining starch to sugar. Once the process of cleaving maltose units from the ends of the starch molecules is sufficiently completed, the sugary liquid is drained off, boiled to kill any spoilage bacteria and wild yeasts, and cooled to produce "wort". Once cool, a yeast strain appropriate for beer brewing is added to the wort, and the yeast converts the glucose, maltose and other sugars in the liquid to alcohol and carbon dioxide.

In the present invention, pyrodextrins, such as, without limitation, those prepared according to Example 1, are added immediately prior to or during either the mash stage or the fermentation stage. At the mash stage, the enzymes in the malt will cleave whatever α-1-4 linkages are accessible. The cleavage of these linkages will produce shorter-chain sugars, which can later be fermented by the yeast, and soluble fiber, which is not digestible by the yeast. The finished beer will therefore be high in soluble fiber.

Alternatively, the pyrodextrin can be added to the wort. As the yeast ferments the wort, the added alpha amylase and glucosidases will convert the digestible portions of the pyrodextrin to glucose (which is then further digested into alcohol and carbon dioxide) and soluble fiber (which is not digestible). The finished beer will be high in soluble fiber.

At either stage, amylases and glucosidases can also be added to ensure and/or accelerate conversion of the pyrodextrins.

The pyrodextrin can also be added to a beer kit, where the beer kit includes a fermentable sugar source (*e.g.*, malt sugar, malt syrup, sugars of various kinds, or mixtures thereof, or malted grain from which the sugars have not yet been extracted) and the pyrodextrin as described herein. Such beer kits can also include hops, hop extracts, yeast, spices, and other ingredients commonly found in such kits.

The pyrodextrin can also be added in making wine. In winemaking, grapes and/or other fruits are pressed. Although some fruits, such as grapes, have native yeasts that can be used to ferment the native sugars, yeast often is added to the pressed fruit or juice obtained therefrom, and converts the sugars in the juice to alcohol and carbon dioxide. Additional sugars and flavorings can be added to the fermentation mix the affect the qualities of the wine, as is well-known in the art of winemaking.

The pyrodextrin can also be included in a wine kit. Such wine kits commonly include pressed juice, which may be concentrated to reduce handling and shipping costs, yeast, additives (*e.g.*, acid blend, tannin, ascorbic acid, citric acid, malic acid, tartaric acid), finings and clarifiers (*e.g.*, bentonite, gelatin, isinglass, sparkaloid, polyclar, pectic enzyme), stabilizers and sanitizers (potassium sorbate, sodium metabisulfite), and other ingredients (*e.g.*, oak chips or sawdust, calcium carbonate, yeast nutrient, glycerine).

The amount of soluble fiber in the finished beverage can be manipulated by those of ordinary skill in the brewing and vintning arts. For instance, if a pyrodextrin having 50% undigestible linkages is added in making wine, half of the pyrodextrin will be cleaved to simpler molecules and fermented, and the other half of the pyrodextrin will remain in the finished product as soluble fiber. The vintner or brewer can maintain the alcohol level of the finished product by substituting pyrodextrin for fermentable sugar at a rate of two to one. Such a product may have a much heavier "mouthfeel" than a product made without the pyrodextrin, and so the brewer or vintner may wish to adjust the formulation slightly to account for the change in taste.

In the present invention, pyrodextrins, such as, without limitation, those prepared according to Example 1, are added to the must (the juice) along with appropriate amylases and alpha-glucosidases before fermentation begins. As the yeast ferments the sugars in the wine must, the enzymes will also break down the pyrodextrin to glucose (which is then fermented into alcohol and carbon dioxide) and soluble fiber (which is not digestible). The finished wine will be high in soluble fiber.

Pyrodextrins can also be included in making traditional-style cured sausages, such as semi-dry and dry sausage, salami, mortadella, pepperoni, summer sausage, thuringer and soudjouk. Such sausages include in their manufacture dextrin or other sugars, and are cured for a period of time, during which fermentation of the sugars by beneficial organisms occurs, which retards the growth of spoilage bacteria. Lactic acid-producing organisms such as *Lactobacillus, Pediococcus* and *Streptococcus* are commonly-utilized organisms in sausage production. The organisms can be naturally-occurring, or can be introduced as a starter culture. Replacement of all or a part of the dextrin or other sugar with the pyrodextrins of the present invention results in a sausage having and increased soluble fiber content.

EXAMPLES

Example 1. A Method For Pyrodextrin Production.

Pyrodextrins are made by heating acidified starch in the absence of water. Common cornstarch was dried at ~100°C to about 4% moisture. Hydrochloric acid was applied to the starch, either in gaseous form or by aspiration of a 10% solution of HCl, until a 5% suspension of starch in water yielded a pH between 2.4 and 2.8 (0.60-0.75gms HCl / kg starch). The acidified starch was dried at ~105°C to about 2% moisture then roasted at ~150-170°C for I to 4 hours. After roasting, a quantity of dry sodium carbonate equal to the molar quantity of acid added was mixed with the pyrodextrin to neutralize the acid and the pyrodextrin was cooled. This produced a pyrodextrin with a fiber content of approximately 55%.

The fiber content of the pyrodextrin was estimated by digestion of a solution of pyrodextrin with $\alpha$-amylase and glucoamylase.

*Reagents*

0.1M Phosphate Buffer at pH 6.2
$\alpha$-Amylase (12,000 LU/ml)
Glucoamylase (400 SGU/ml)
0.1N Sodium Hydroxide
0.3M Hydrochloric Acid

*$\alpha$-Amylase Digestion*

1. Accurately weigh about 0.4 grams dry basis of the sample in a screw top test tube.
2. Add 20mL of 0.1M Phosphate Buffer at pH 6.2.
3. Add 50mL of alpha-Amylase, tightly seal the tube and heat to 95°C and hold for 30 minutes.

*Glucoamylase Digestion*

1. Completely transfer the contents of the alpha-Amylase Digestion to a 125mL flask.
2. Dilute to about 50mL total volume with deionized water.
3. Adjust the pH to between 4.0 and 4.7 with 0.3M hydrochloric acid.
4. Add 50mL of Glucoamylase and heat to 60°C for 40 minutes.
5. After cooling, dilute the digest to 100ml.

*Sample analysis via Liquid Chromatography*

1. Determine the dextrose, DP2 and DP3+ content of the sample as described in method E-61 of *Standard Analytical Methods of the Corn Refiners Association, Inc.,* 6th edition, which is hereby incorporated by reference.

2. Determine the fiber (y) from the following formula where (a) is the original sample mass, (b) is the determined dextrose mass and (c) is the determined DP2 mass:

$$\text{Percent Fiber: } y = 100 \times (a - (0.9b) - (0.95c)) / a$$

Example 2. Cultured Yoghurt Product.

The pyrodextrin of the present invention can be included in formulations for yoghurt. One exemplary formulation is provided below, however, other formulations also can include the pyrodextrin.

*Ingredients*

| Ingredient | %(by weight) | 3500g batch |
|---|---|---|
| Milk (2%Milkfat) | 54.000 | 1890.00 |
| Non-Fat Dry Milk | 9.523 | 333.31 |
| Stabilizer | 0.500 | 17.50 |
| Sucrose | 1.500 | 52.50 |
| Pyrodextrin | 5.560 | 194.60 |
| Water | 28.917 | 1012.10 |
| Total | 100.000 | 3500.00 |

Active yoghurt culture is added at the rate of 0.0035% based on the weight of white mass (*e.g.*, DriSet YOGHURT 424, which is made up of 90% *Streptococcus thermophilus* and 10% *Lactobacillus bulgaricus,* and is manufactured by Vivolac, Indianapolis, Indiana, USA).

In the above formulation, the stabilizer used was Grindsted SSD-5110 Stabilizer System, which is made up of gelatin, food starch and pectin, and is manufactured by Danisco Cultor. Other appropriate stabilizers are known to those of ordinary skill in the art of food formulation.

*Procedure of Manufacture*

1. Weigh out dry ingredients in the formulation, excluding the culture, and dry blend them.

2. Combine liquid ingredients (milk and water) in a vessel, and under moderate shear slowly add the mixed dry ingredients into water/milk blend.

3. After all dry ingredient is added, allow the solution of mix for 5-7 minutes, taking care to make sure that there are no dry clumps left on the shaft or on the bottom of the mixing vessel.

4. Homogenize the mixture using a 2 stage homogenizer at 2500 and 500 PSI for the first and second stage respectively.

5. Thermally process the mixture after homogenization at a temperature of 85°C for a hold of 30 seconds, and discharging from the hold at 35-45°C, taking care to discharge the solution into a sterile container.

6. Add the culture at an appropriate rate of usages, in this case 0.0035%, to the solution in the sterile container, and place in a 40-43°C incubator for a minimum period of 6 hours. The incubation time depends on the level of acidity desired in the finished product, and the viability of the culture.

7. Remove from incubator, refrigerate. Yogurt is now ready for consumption.

The cultured yoghurt product described above delivers a minimum of 3g/serving of soluble, dietary fiber.

Example 3. White Pan Bread, Sponge and Dough Method.

The pyrodextrin can be used in making bread. In methods of bread making that use a sponge, which is then used to make a dough, the pyrodextrin can be added to either the sponge or the dough. A method is provided below in which the pyrodextrin is added to the dough.

*Ingredients for Sponge*

| Ingredients | Baker's %* |
|---|---|
| Flour (12.5% protein) | 70% |
| Water | 42 |
| Yeast, compressed | 0.5 |
| Sodium Steroyl Lactylate (SSL) | 0.5 |
| Mono & Diglyceride | 0.5 |
| Yeast Food (Arkady) | 0.5 |
| Shortening (101-050) | 3.0 |
| Ascorbic Acid** | 50 ppm |
| Wheat Gluten (114400) | 2.0 |
| * Baker's formulae are based on the weight of flour which is assigned 100%. Any other material being added is expressed as a percentage of this amount. The flour in the sponge and the dough are combined to result in 100% of the weight of the flour.<br>** "50 ppm" is intended to mean 0.005%. | |

*Procedure for Making Sponge*

1. Add water (10°C) to dry ingredients in McDuffy bowl or equivalent (15°C) and mix 2 minutes on low speed (1), then 5 minutes on medium speed (2) in a Hobart mixer, or equivalent.
2. Place sponge into a lightly oiled, covered container and ferment for 2 hours at 30°C.

*Ingredients for Dough*

| Ingredients | Baker's % |
|---|---|
| Flour (12.5% protein) | 30 |
| Water | 20 |
| Sugar | 6.0 |
| Pyrodextrin | 17.7 |
| Calcium Propionate | 0.2 |
| Salt | 2.0 |

*Procedure for Making Dough*

1. Add dry ingredients (except salt) and tempered water (7°C) into a McDuffy bowl (or equivalent), include 8.57 ml of Optidex L-400 (an amylase)/lb of pyrodextrin with water and mix for 1 minute on low speed (1).
2. Add sponge to bowl and mix on low speed (1) for 20 seconds. Increase to medium speed (2) and mix for an additional 3 minutes. Add salt, mixing for 20 seconds on low speed (1) and 3 minutes on medium speed (2).
3. Scale loaves at 18 oz. (510 g). Run dough pieces through a table sheeter at ¼ inch setting, followed by a second sheeting at 5/32 inch. Fold dough into thirds and process through a former. Place into well greased bread pans and proof loaves at 45°C to ¾ inch height above pan top (approximately 75 minutes).
4. Remove pans from proof box and bake at 215°C (420°F) for 18 minutes.
5. Remove from oven and allow to cool for 1 hour before depanning and slicing.

The bread made according to this formulation delivers a minimum of 3g/serving of soluble, dietary fiber.

Example 4. Traditional Lager-Style American Beer (Dry Malt Extract Formulation).

The pyrodextrin can also be used in brewing formulations to produce beer containing soluble fiber. One such formulation is provided below, but others can be made by those of ordinary skill in the brewing field.

*Ingredients*

| Ingredient | Amount |
|---|---|
| Malt extract, dried, light | 3.5 lb. |
| *Adjuncts* | |
| 62-DE Corn syrup | 0.32 lb. |
| 95-DE Corn syrup | 0.3 lb. |
| Rice syrup solids | 0.3 lb. |
| Pyrodextrin 959 | 1.4 lb. |
| Total | 5.82 lbs. |
| Hops, pelleted | 1 oz. |

*Procedure*

2 gallons of water were heated to 135°F while stirring. The dried malt extract was added. This mixture was brought to boiling while stirring, then allowed to gently boil for 15 minutes. All adjuncts were added (this complete mixture will be termed 'wort'). The hops were then added, and the mixture allowed to gently boil while stirring for 45 minutes. The hops were removed from the wort and the wort was transferred to the fermentation vessel containing 1.5 gallons of water while stirring. The total volume was adjusted to 5 gallons with water. When the temperature reached 98°F, 12 ml of Optidex L-400 (an amylase) was added then stirred for 15 minutes. The wort was allowed to cool to 55-65°F over 24 hours. After 24 hours, 1 packet of rehydrated lager yeast was added while stirring. The mixture was then maintained at 55-65°F. After 5-7 days (depending on fermentation progress), this primary fermentation solution was transferred to a clean carboy and allowed to continue fermentation for an additional 7 days at 55-65°F. A portion of the secondary fermentation solution was removed. Priming sugar (dextrose) was added to the secondary fermentation solution then transferred to bottles and capped.

Beer made according to the above formulation delivers a minimum of 3g of soluble, dietary fiber per 12 oz serving.

Example 6. Traditional-Style Pepperoni Formulation.

The pyrodextrin can be used in formulations for traditionally cured sausages, such as semi-dry and dry sausage, salami, mortadella, pepperoni, summer sausage, thuringer and soudjouk. A formulation for traditional-style pepperoni (32% fat) is provided below.

*Ingredients*

| Ingredient | Amount (% of total) |
|---|---|
| Pork (95 % lean) | 19.4 |
| Pork (72 % lean) | 52.5 |
| Beef (50/50) | 24.0 |
| Nitrite | 0.02 |
| Salt | 3.10 |
| Pyrodextrin | 0.60 |
| Flavoring (Colorlife™) | 0.38 |
| Starter culture (HP-culture, Diversitech) | 0.02 |
| TOTALS | 100.0 |

*Procedure:*

1. Coarse grind meat raw materials (1/2" to 1").
2. Place in mixer and add salt, nitrite/nitrate & pyrodextrin and mix to incorporate ingredients. Mix minimally to prevent heat build-up and fat smearing.
3. Add flavoring and starter culture (~0.4% Colorlife™; 0.02% Starter Culture, Diversitech HP frozen) and mix to incorporate.
4. Add protein crumbles and mix to distribute.
5. Grind product again (3/16").
6. Stuff product into 2" (fibrous casings). Product should be kept cold to prevent fat smearing during stuffing step.
7. Temper product at 70°F for 2 to 4 hours.
8. Ferment product at 100°F and 85-90% relative humidity for 12-14 hours or until pH reaches 5.1 or less.
9. Thermal process product as indicated in the cooking cycle listed below.

| Stage | Time | Internal Temp (°F) | Smoke | Dry Bulb (°F) | Wet Bulb (°F) | Damper |
|---|---|---|---|---|---|---|
| 1 | 30 | - | - | 110 | 0 | on |
| 2 | 60 | - | - | 120 | 107 | on |

10. After fermentation and thermal processing place sticks in a 45-55°F room at 40-60° relative humidity and allow to dry to a moisture:protein ratio of 1.6:1 (~ 3-4 weeks).

Example 6. Manufacture of High Fiber Condiments.

Many condiments, such as soy sauce, are fermentation products. Soy sauce includes shoyu (the fermentation product of soybeans, roasted wheat, sea salt, and koji (*Aspergillus oryzae*) and tamari (the fermentation product of soybeans, sea salt, water, and koji (*Aspergillus hacho*). Such condiments can also be made according to the invention, by inclusion of randomized, dextrinized polysaccharides, such as those prepared according to Example 1, before fermentation. Amylases and glucosidases can also be added to ensure conversion of the pyrodextrins to fiber. The condiments produced in this way will be higher in soluble fiber than the same condiments made through current processes.

## Claims

1. A method of making a fermented foodstuff having an increased amount of soluble fiber relative to a foodstuff not made with the method, comprising: (a) mixing pyrodextrin into the foodstuff before fermentation; and (b) fermenting the foodstuff under conditions that allow digestion of starch linkages; thereby making a fermented foodstuff having an increased amount of soluble fiber relative to a foodstuff not made with the method.

2. The method of claim 1, further comprising mixing a starch degrading enzyme into the foodstuff before fermentation.

3. The method of claim 1, wherein the fermented foodstuff is selected from the group consisting of: bread, bread dough, rolls, bread mix, beer, wine, cheese, yoghurt, vinegar, soy sauce, tamari, shoyu, miso, natto, tempeh, amazake, kefir, kimchee and sauerkraut.

4. A method of making a bread having an increased amount of soluble fiber relative to a bread not made with the method, the method comprising: in a method of making bread by a method comprising the steps of :

   (i) optionally making a bread sponge and allowing the bread sponge to undergo one or more risings;
   (ii) making a bread dough that includes the bread sponge and allowing the bread dough to undergo one or more risings; and
   (iii) baking the bread dough;

   and adding pyrodextrin to the bread sponge, or the bread dough, or to both the bread sponge and the bread dough; thereby making a bread having an increased amount of soluble fiber relative to a bread not made with the method.

5. The method of claim 4, further comprising mixing a starch degrading enzyme into the bread sponge or the bread dough or both before allowing the bread sponge or the bread dough or both to undergo one or more risings.

6. A method of making a bread sponge or bread dough or both having an increased amount of soluble fiber relative to a bread sponge or bread dough or both not made with the method, the method comprising mixing pyrodextrin into the bread sponge or the bread dough or both before allowing the bread sponge or the bread dough or both to undergo one or more risings; thereby making a bread sponge or bread dough or both having an increased amount of soluble fiber relative to a bread sponge or bread dough or both not made with the method.

7. The method of claims 6, further comprising mixing a starch degrading enzyme into the bread sponge or the bread dough or both before allowing the bread sponge or the bread dough or both to undergo one or more risings.

8. The method of claim 6, wherein the bread dough is packaged for the making of rolls.

9. A method of making yoghurt having an increased amount of soluble fiber relative to yoghurt not made with the method, the method comprising adding pyrodextrin to the yoghurt formulation before culture with active yoghurt cultures, thereby making yoghurt having an increased amount of soluble fiber relative to yoghurt not made with the method.

10. A method of making a beer having an increased amount of soluble fiber relative to a beer not made with the method, the method comprising mixing pyrodextrin into a beer mash, and producing beer from the beer mash.

11. The method of claim 10, further comprising mixing a starch degrading enzyme into the beer mash.

12. A method of making a beer having an increased amount of soluble fiber relative to a beer not made with the method, the method comprising mixing pyrodextrin into beer wort, and fermenting the wort.

13. The method of claim 12, further comprising mixing a starch degrading enzyme into the beer wort.

14. A method of making a wine having an increased amount of soluble fiber relative to a wine not made with the method, the method comprising mixing pyrodextrin into wine must, and fermenting the wine must.

15. The method of claim 14, further comprising mixing a starch degrading enzyme into the wine most.

16. A fermented foodstuff comprising a pyrodextrin.

17. The fermented foodstuff of claim 16, wherein the foodstuff is selected from the group consisting of: bread, bread dough, rolls, bread mix, beer, wine, cheese, vinegar, soy sauce, tamari, shoyu, miso, natto, tempeh, amazake, kefir, kimchee and sauerkraut.

18. The fermented foodstuff produced according to the method of claim 1, the foodstuff comprising pyrodextrin.

19. The method according to any of claims 1-15, where 30%, 40%, 50% or more of the alpha linkages in the pyrodextrin are undigestible by $\alpha$ -amylases or $\alpha$ - glucosidases.

20. The method according to any of claims 2, 5, 7, 11, 13 or 15, wherein the starch degrading enzyme is an amylase or glucosidase.

21. The method according to any of claims 1-15, 19 or 20, wherein the amount of pyrodextrin added is between about 2 to about 12 grams per serving.

22. The method according to claim 21, wherein the amount of pyrodextrin added is about 6 grams per serving.

23. The method according to any of claims 1-15, or 19 to 22, wherein the amount of soluble fiber in the foodstuff, bread, yoghurt, beer, or wine, is between about 1 gram and about 6 grams per serving.

24. The method according to claim 23, wherein the amount of soluble fiber is about 3 grams per serving.

25. The fermented foodstuff according to any of claims 16-18, where 30%, 40%, 50% or more of the alpha linkages in the pyrodextrin are undigestible by $\alpha$ -amylases or $\alpha$-glucosidases.

26. The fermented foodstuff according to any of claims 16-18, further comprising a starch degrading enzyme.

27. The fermented foodstuff according to claim 26, wherein the starch degrading enzyme is an amylase or glucosidase.

28. The fermented foodstuff according to any of claims 16-18, 25, 26 or 27, wherein the amount of pyrodextrin is between about 2 to about 12 grams per serving.

29. The, fermented foodstuff according to claim 28, wherein the amount of pyrodextrin is about 6 grams per serving.

30. The fermented foodstuff according to claim 16 or 17 or 18, wherein the amount of soluble fiber in the foodstuff is between about 1 gram and about 6 grams per serving.

31. The fermented foodstuff according to claim 30, wherein the amount of soluble fiber in the foodstuff is about 3 grams per serving.

**Patentansprüche**

1. Verfahren zum Herstellen eines fermentierten Nahrungsmittels mit einem erhöhten Gehalt an löslichen Ballaststoffen, verglichen mit einem nicht gemäß diesem Verfahren hergestellten Nahrungsmittel, umfassend: (a) Einmischen von Pyrodextrin in das Nahrungsmittel vor der Fermentation; und (b) Fermentieren des Nahrungsmittels unter Bedingungen, welche den Aufschluss von Stärkebindungen zulassen; **dadurch** Herstellen eines fermentierten Nahrungsstoffes mit einem erhöhten Gehalt an löslichen Ballaststoffen, verglichen mit einem nicht gemäß diesem Verfahren hergestellten Nahrungsmittel.

2. Verfahren gemäß Anspruch 1, ferner umfassend das Einmischen eines stärkeabbauenden Enzyms in das Nahrungsmittel vor der Fermentation.

3. Verfahren gemäß Anspruch 1, wobei das fermentierte Nahrungsmittel ausgewählt ist aus der Gruppe bestehend aus: Brot, Brotteig, Brötchen, Brotmischungen, Bier, Wein, Käse, Jogurt, Essig, Sojasoße, Tamari, Shoyu, Miso, Natto, Tempeh, Amazake, Kefir, Kimchee und Sauerkraut.

4. Verfahren zum Herstellen eines Brotes mit einem erhöhten Gehalt an löslichen Ballaststoffen, verglichen mit einem nicht gemäß diesem Verfahren hergestellten Brot, das Verfahren umfassend: in einem Verfahren zum Herstellen von Brot ein Verfahren umfassend die Schritte:

(i) optional, Herstellen eines Brot-Vorteiges und ein- oder mehrfaches Aufgehenlassen des Brot-Vorteiges;

(ii) Herstellen eines Brotteiges, der einen Brot-Vorteig enthält, und ein- oder mehrfaches Aufgehenlassen des Brotteiges; und

(iii) Backen des Brotteiges; und Hinzufügen von Pyrodextrin zu dem Brot-Vorteig oder dem Brotteig oder zu dem Brot-Vorteig und dem Brotteig;

**dadurch** Herstellen eines Brotes mit einem erhöhten Gehalt an löslichen Ballaststoffen, verglichen mit einem nicht gemäß diesem Verfahren hergestellten Brot.

5. Verfahren gemäß Anspruch 4, ferner umfassend das Einmischen eines stärkeabbauenden Enzyms in den Brot-Vorteig oder den Brotteig oder beide, bevor der Brot-Vorteig oder der Brotteig oder beide ein- oder mehrfach aufgehen gelassen werden.

6. Verfahren zum Herstellen eines Brot-Vorteiges und/oder Brotteiges mit einem erhöhten Gehalt an löslichen Ballaststoffen, verglichen mit einem nicht gemäß diesem Verfahren hergestellten Brot-Vorteig und/oder einem nicht gemäß diesem Verfahren hergestellten Brotteig, das Verfahren umfassend Einmischen von Pyrodextrin in den Brot-Vorteig und/oder den Brotteig, bevor der Brot-Vorteig und/oder der Brotteig ein- oder mehrfach aufgehen gelassen werden; **dadurch** Herstellen eines Brot-Vorteiges und/oder Brotteiges mit einem erhöhten Gehalt an löslichen Ballaststoffen, verglichen mit einem nicht gemäß diesem Verfahren hergestellten Brot-Vorteig und/oder einem Brotteig.

7. Verfahren gemäß Anspruch 6, ferner umfassend das Einmischen eines stärkeabbauenden Enzyms in den Brot-Vorteig und/oder den Brotteig, bevor der Brot-Vorteig und/oder der Brotteig ein- oder mehrfach aufgehen gelassen werden.

8. Verfahren gemäß Anspruch 6, wobei der Brotteig für die Herstellung von Brötchen abgepackt ist.

9. Verfahren zum Herstellen von Jogurt mit einem erhöhten Gehalt an löslichen Ballaststoffen, verglichen mit nicht gemäß diesem Verfahren hergestellten Jogurt, das Verfahren umfassend Zugeben von Pyrodextrin zu der Jogurtformulierung vor dem Kultivieren mit aktiven Jogurtkulturen, **dadurch** Herstellen des Jogurts mit einem erhöhten Gehalt an löslichen Ballaststoffen, verglichen mit einem nicht gemäß diesem Verfahren hergestellten Jogurt.

10. Verfahren zum Herstellen eines Bieres mit einem erhöhten Gehalt an löslichen Ballaststoffen, verglichen mit einem nicht gemäß diesem Verfahren hergestellten Bier, das Verfahren umfassend Einmischen von Pyrodextrin in eine Biermaische und Erzeugen des Bieres aus der Biermaische.

11. Verfahren gemäß Anspruch 10, ferner umfassend Einmischen eines stärkeabbauenden Enzyms in die Biermaische.

12. Verfahren zum Herstellen eines Bieres mit einem erhöhten Gehalt an löslichen Ballaststoffen, verglichen mit einem nicht gemäß diesem Verfahren hergestellten Bier, das Verfahren umfassend Einmischen von Pyrodextrin in eine Bierwürze und Fermentieren der Würze.

13. Verfahren gemäß Anspruch 12, ferner umfassend Einmischen eines stärkeabbauenden Enzyms in die Bierwürze.

14. Verfahren zum Herstellen eines Weines mit einem erhöhten Gehalt an löslichen Ballaststoffen, verglichen mit einem nicht gemäß diesem Verfahren hergestellten Wein, das Verfahren umfassend Einmischen von Pyrodextrin in Weinmost und Fermentieren des Weinmostes.

15. Verfahren gemäß Anspruch 14, ferner umfassend Einmischen eines stärkeabbauenden Enzyms in den Weinmost.

16. Fermentiertes Nahrungsmittel umfassend ein Pyrodextrin.

17. Fermentiertes Nahrungsmittel gemäß Anspruch 16, wobei das Nahrungsmittel ausgewählt ist aus der Gruppe bestehend aus: Brot, Brotteig, Brötchen, Brotmischungen, Bier, Wein, Käse, Essig, Sojasoße, Tamari, Shoyu, Miso, Natto, Tempeh, Amazake, Kefir, Kimchee und Sauerkraut.

18. Fermentiertes Nahrungsmittel, das gemäß dem Verfahren nach Anspruch 1 hergestellt wurde, wobei das Nahrungsmittel Pyrodextrin umfasst.

**19.** Verfahren gemäß einem der Ansprüche 1 bis 15, wobei 30 %, 40 %, 50 % oder mehr der α-Bindungen in dem Pyrodextrin nicht durch α-Amylasen oder α-Glucosidasen aufspaltbar sind.

**20.** Verfahren gemäß einem der Ansprüche 2, 5, 7, 11, 13 oder 15, wobei das stärkeabbauende Enzym eine Amylase oder Glucosidase ist.

**21.** Verfahren gemäß einem der Ansprüche 1 bis 15, 19 oder 20, wobei die Menge an zugegebenem Pyrodextrin zwischen etwa 2 bis etwa 12 Gramm pro Portion liegt.

**22.** Verfahren gemäß Anspruch 21, wobei die Menge an zugegebenem Pyrodextrin etwa 6 Gramm pro Portion ist.

**23.** Verfahren gemäß einem der Ansprüche 1 bis 15 oder 19 bis 22, wobei der Gehalt an löslichem Ballaststoff in dem Nahrungsmittel, Brot, Jogurt, Bier oder Wein zwischen etwa 1 Gramm und etwa 6 Gramm pro Portion ist.

**24.** Verfahren gemäß Anspruch 23, wobei der Gehalt an löslichem Ballaststoff etwa 3 Gramm pro Portion ist.

**25.** Fermentiertes Nahrungsmittel gemäß einem der Ansprüche 16 bis 18, wobei 30 %, 40 %, 50 % oder mehr der α-Bindungen in dem Pyrodextrin nicht durch α-Amylasen oder α-Glucosidasen aufspaltbar sind.

**26.** Fermentiertes Nahrungsmittel gemäß einem der Ansprüche 16 bis 18, ferner umfassend ein stärkeabbauendes Enzym.

**27.** Fermentiertes Nahrungsmittel gemäß Anspruch 26, wobei das stärkeabbauende Enzym eine Amylase oder Glucosidase ist.

**28.** Fermentiertes Nahrungsmittel gemäß einem der Ansprüche 16 bis 18, 25, 26 oder 27, wobei der Gehalt an Pyrodextrin zwischen etwa 2 und etwa 12 Gramm pro Portion ist.

**29.** Fermentiertes Nahrungsmittel gemäß Anspruch 28, wobei der Gehalt an Pyrodextrin etwa 6 Gramm pro Portion ist.

**30.** Fermentiertes Nahrungsmittel gemäß Anspruch 16 oder 17 oder 18, wobei der Gehalt an löslichem Ballaststoff in dem Nahrungsmittel zwischen etwa 1 Gramm und etwa 6 Gramm pro Portion ist.

**31.** Fermentiertes Nahrungsmittel gemäß Anspruch 30, wobei der Gehalt an löslichem Ballaststoff in dem Nahrungsmittel etwa 3 Gramm pro Portion ist.

**Revendications**

**1.** Procédé de fabrication d'un aliment fermenté ayant une quantité accrue de fibres solubles par rapport à un aliment non réalisé selon le procédé, comportant les étapes consistant à : (a) mélanger de la pyrodextrine dans l'aliment avant fermentation ; et (b) faire fermenter l'aliment sous des conditions qui permettent une digestion de liaisons d'amidon, en réalisant ainsi un aliment fermenté ayant une quantité accrue de fibres solubles par rapport à un élément non réalisé selon le procédé.

**2.** Procédé selon la revendication 1, comprenant en outre le mélange d'une enzyme de décomposition d'amidon dans l'aliment avant fermentation.

**3.** Procédé selon la revendication 1, dans lequel l'élément fermenté est sélectionné dans le groupe comprenant du pain, de la pâte à pain, du pain mollet, du pain mixte, de la bière, du vin, du fromage, du yaourt, du vinaigre, de la sauce de soja, du tamari, du shoyu, du miso, du natto, du tempeh, de l'amazake, du kéfir, du kimchee, et de la choucroute.

**4.** Procédé de production d'un pain ayant une quantité accrue de fibres solubles par rapport à un pain non réalisé selon le procédé, le procédé comportant les étapes consistant à :

(i) fabriquer facultativement une éponge de pain, et permettre à l'éponge de pain de lever un ou plusieurs fois,
(ii) réaliser une pâte à pain qui comprend l'éponge de pain, et permettre à la pâte à pain de lever un ou plusieurs fois, et

(iii) cuire la pâte à pain,

et ajouter de la pyrodextrine à l'éponge de pain, ou à la pâte à pain, ou à l'éponge de pain et à la pâte à pain, en réalisant ainsi un pain ayant une quantité accrue de fibres solubles par rapport à un pain non réalisé selon le procédé.

**5.** Procédé selon la revendication 4, comportant en outre le mélange d'une enzyme de dégradation d'amidon dans l'éponge de pain ou la pâte à pain ou les deux, avant d'autoriser l'éponge de pain ou la pâte à pain ou les deux à lever un ou plusieurs fois.

**6.** Procédé de production d'une éponge de pain ou d'une pâte à pain ou des deux ayant une quantité accrue de fibres solubles par rapport à une éponge de pain ou une pâte à pain ou les deux non réalisée(s) selon le procédé, le procédé comprenant le mélange de pyrodextrine dans l'éponge de pain ou la pâte à pain ou les deux avant d'autoriser l'éponge de pain ou la pâte à pain ou les deux à lever un ou plusieurs fois, en réalisant ainsi une éponge de pain ou une pâte à pain ou les deux ayant une quantité accrue de fibres solubles par rapport à une éponge de pain ou une pâte à pain ou les deux non réalisée (s) à l'aide du procédé.

**7.** Procédé selon la revendication 6, comprenant en outre le mélange d'une enzyme de décomposition d'amidon dans l'éponge de pain ou la pâte à pain ou les deux avant d'autoriser l'éponge de pain ou la pâte à pain ou les deux à lever un ou plusieurs fois.

**8.** Procédé selon la revendication 6, dans lequel la pâte à pain est conditionnée pour réaliser des pains mollets.

**9.** Procédé de fabrication d'un yaourt ayant une quantité accrue de fibres solubles par rapport à un yaourt non réalisé selon le procédé, le procédé comprenant l'ajout de pyrodextrine à la formulation de yaourt avant culture avec des cultures de yaourt actives, en réalisant ainsi un yaourt ayant une quantité accrue de fibres solubles par rapport au yaourt non réalisé selon le procédé.

**10.** Procédé de fabrication d'une bière ayant une quantité accrue de fibres solubles par rapport à une bière non réalisée selon le procédé, le procédé comprenant le mélange de pyrodextrine dans un empâtage de bière, et la production de bière à partir de l'empâtage de bière.

**11.** Procédé selon la revendication 10, comportant en outre le mélange d'une enzyme de décomposition d'amidon dans l'empâtage de bière.

**12.** Procédé de fabrication d'une bière ayant une quantité accrue de fibres solubles par rapport à une bière non réalisée selon le procédé, le procédé comprenant le mélange de pyrodextrine dans un moût de bière, et la fermentation du moût.

**13.** Procédé selon la revendication 12, comprenant en outre le mélange d'une enzyme de décomposition d'amidon dans le moût de bière.

**14.** Procédé de production d'un vin ayant une quantité accrue de fibres solubles par rapport à un vin non réalisé selon le procédé, le procédé comprenant le mélange de pyrodextrine dans le moût de vin, et la fermentation du moût de vin.

**15.** Procédé selon la revendication 14, comprenant en outre le mélange d'une enzyme de décomposition d'amidon dans le moût de vin.

**16.** Aliment fermenté comprenant de la pyrodextrine.

**17.** Aliment fermenté selon la revendication 16, dans lequel l'aliment est sélectionné dans le groupe comprenant du pain, de la pâte à pain, des pains mollets, du pain mixte, de la bière, du vin, du fromage, du vinaigre, de la sauce de soja, du tamari, du shoyu, du miso, du natto, du tempeh, de l'amazake, du kéfir, du kimchee et de la choucroute.

**18.** Aliment fermenté produit selon le procédé de la revendication 1, l'aliment comprenant de la pyrodextrine.

**19.** Procédé selon l'une quelconque des revendications 1 à 15, dans lequel 30 %, 40 %, 50 % ou plus des liaisons alpha dans la pyrodextrine ne peuvent pas être digérées par des $\alpha$-amylases ou des $\alpha$-glucosidases.

20. Procédé selon l'une quelconque des revendications 2, 5, 7, 11, 13 ou 15, dans lequel l'enzyme de décomposition d'amidon est une amylase ou glucosidase.

21. Procédé selon l'une quelconque des revendications 1 à 15, 19 ou 20, dans lequel la quantité de pyrodextrine ajoutée est comprise entre environ 2 et environ 12 grammes par service.

22. Procédé selon la revendication 21, dans lequel la quantité de pyrodextrine ajoutée est d'environ 6 grammes par portion.

23. Procédé selon l'une quelconque des revendications 1 à 15 ou 19 à 22, dans lequel la quantité de fibres solubles dans l'aliment, le pain, le yaourt, la bière ou le vin est comprise entre environ 1 gramme et environ 6 grammes par portion.

24. Procédé selon la revendication 23, dans lequel la quantité de fibres solubles est d'environ 3 grammes par portion.

25. Aliment fermenté selon l'une quelconque des revendications 16 à 18, dans lequel 30 %, 40 %, 50 % ou plus des liaisons alpha dans la pyrodextrine ne peuvent pas être digérées par des $\alpha$-amylases ou $\alpha$-glucosidases.

26. Aliment fermenté selon l'une quelconque des revendications 16 à 18, comprenant en outre une enzyme de décomposition d'amidon.

27. Aliment fermenté selon la revendication 26, dans lequel l'enzyme de décomposition d'amidon est une amylase ou une glucosidase.

28. Aliment fermenté selon l'une quelconque des revendications 16 à 18, 25, 26 ou 27, dans lequel la quantité de pyrodextrine est comprise entre environ 2 et environ 12 grammes par portion.

29. Aliment fermenté selon la revendication 28, dans lequel la quantité de pyrodextrine est d'environ 6 grammes par portion.

30. Aliment fermenté selon la revendication 16 ou 17 ou 18, dans lequel la quantité de fibres solubles dans l'aliment est comprise entre environ 1 gramme environ 6 grammes par portion.

31. Aliment fermenté selon la revendication 30, dans lequel la quantité de fibres solubles dans l'aliment est d'environ 3 grammes par portion.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0463935 A
- US 5629036 A

- EP 0540421 A

**Non-patent literature cited in the description**

- *Patent Abstracts of Japan,* 31 May 1996, vol. 1996 (5